# EUROPEAN PATENT APPLICATION

(11) **EP 4 465 157 A1**
(43) Date of publication of application: **20.11.2024**
(21) Application number: 23739901.9
(22) Date of filing: 06.01.2023
(51) Int. Cl.: G06F 3/0481, G06F 9/451

(54) **INTERACTION METHOD AND APPARATUS, ELECTRONIC DEVICE, STORAGE MEDIUM, AND PROGRAM PRODUCT**

(30) Priority: 14.01.2022 CN 202210045130
(71) Applicant: Beijing Zitiao Network Technology Co., Ltd., Beijing 100190 (CN)
(72) Inventor: HE, Zitong, Beijing 100086 (CN)
(74) Representative: Dentons UK and Middle East LLP
(86) International application number: PCT/CN2023/070855
(87) International publication number: WO 2023/134558

(57) **Abstract**

The present disclosure provides an interaction method and apparatus, an electronic device, a storage medium, and a program product. The interaction method includes: displaying a content input panel in response to a matching operation for a first content included in a target video sticker, where the target video sticker is added to a target video, and the content input panel is configured for a current user to input a second content matching the first content; and in response to an inputting completion operation, obtaining the second content input by the current user in the content input panel and sending a first matching message, where the first matching message includes the first content and the second content.

## Description

This application claims the priority of Chinese Patent Application filed in the Chinese Patent Office on January 14, 2022, with application number 202210045130.1, and the entire content of which is incorporated by reference in this application.

### TECHNICAL FIELD

Embodiments of the present disclosure relate to the technical field of computers, and in particular, to an interaction method and apparatus, an electronic device, a storage medium, and a program product.

### BACKGROUND

At present, when watching a video, a user can only view a sticker added to the video or simply interact with a video maker on the sticker, e.g., voting. Such a single interaction manner cannot meet the diversified interaction requirements of the user.

### SUMMARY

Embodiments of the present disclosure provides an interaction method and apparatus, an electronic device, a storage medium, and a program product.

In a first aspect, an embodiment of the present disclosure provides an interaction method, including:
displaying a content input panel in response to a matching operation for a first content included in a target video sticker, in which the target video sticker is added to a target video, and the content input panel is configured for a current user to input a second content matching the first content; and
in response to an inputting completion operation, obtaining the second content input by the current user in the content input panel and sending a first matching message, in which the first matching message includes the first content and the second content.

In a second aspect, an embodiment of the present disclosure also provides an interaction apparatus, including:
a panel display module, configured to display a content input panel in response to a matching operation for a first content included in a target video sticker, in which the target video sticker is added to a target video, and the content input panel is configured for a current user to input a second content matching the first content; and
a message sending module, configured to, in response to an inputting completion operation, obtain the second content input by the current user in the content input panel and send a first matching message, in which the first matching message includes the first content and the second content.

In a third aspect, an embodiment of the present disclosure also provides an electronic device, including:
one or more processors; and
a memory, configured to store one or more programs,
in which the one or more programs, when executed by the one or more processors, cause the one or more processors to implement the interaction method as described in the embodiments of the present disclosure.

In a fourth aspect, an embodiment of the present disclosure also provides a computer readable storage medium on which a computer program is stored, in which the computer program, when executed by a processor, causes implementing the interaction method as described in the embodiments of the present disclosure.

In a fifth aspect, an embodiment of the present disclosure also provides a computer program product which, when executed by a computer, causes the computer to implement the interaction method as described in the embodiments of the present disclosure.

### BRIEF DESCRIPTION OF THE DRAWINGS

In the drawings throughout, same or similar drawing reference signs represent same or similar elements. It should be understood that the drawings are schematic, and originals and elements may not necessarily be drawn to scale.
Fig. 1 is a flowchart of an interaction method provided in an embodiment of the present disclosure;
Fig. 2 is a schematic diagram of a target video sticker provided in an embodiment of the present disclosure;
Fig. 3 is a schematic diagram of display of a content input panel provided in an embodiment of the present disclosure;
Fig. 4 is a schematic diagram of display of a sticker panel provided in an embodiment of the present disclosure;
Fig. 5 is a schematic diagram of a comment showing region provided in an embodiment of the present disclosure;
Fig. 6 is a flowchart of another interaction method provided in an embodiment of the present disclosure;
Fig. 7 is a schematic diagram of a matching result window provided in an embodiment of the present disclosure;
Fig. 8 is a schematic diagram of a share poster provided in an embodiment of the present disclosure;
Fig. 9 is a schematic diagram of another matching result window provided in an embodiment of the present disclosure;
Fig. 10 is a structural block diagram of an interaction apparatus provided in an embodiment of the present disclosure; and
Fig. 11 is a structural schematic diagram of an electronic device provided in an embodiment of the present disclosure.

### DETAILED DESCRIPTION

Embodiments of the present disclosure will be described below with reference to the drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only for exemplary purposes and are not intended to limit the protection scope of the present disclosure.

It should be understood that the various steps described in the method embodiments of the present disclosure may be performed in different orders and/or in parallel. Furthermore, the method embodiments may include additional steps and/or omit performing the illustrated steps. The protection scope of the present disclosure is not limited in this aspect.

As used herein, the term "include," "comprise," and variations thereof are open-ended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," or the like mentioned in the present disclosure are illustrative rather than restrictive, and those skilled in the art should understand that unless the context clearly indicates otherwise, these modifications should be understood as "one or more."

The names of the messages or information exchanged between a plurality of apparatuses in the embodiments of the present disclosure are for illustrative purposes only and are not intended to limit the scope of these messages or information.

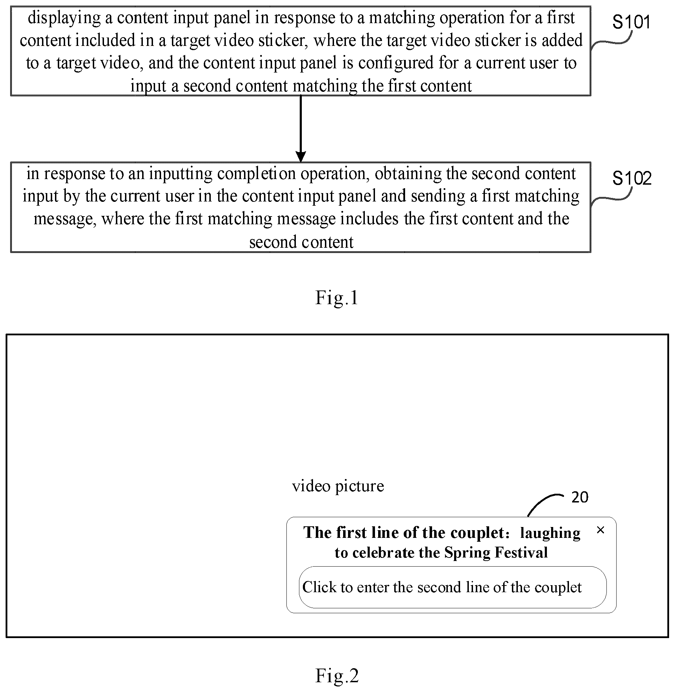

Fig. 1 is a flowchart of an interaction method provided in an embodiment of the present disclosure. The interaction method may be performed by an interaction apparatus that may be implemented by software and/or hardware and may be configured in an electronic device, typically configured in a mobile phone or a tablet computer. The interaction method provided in the embodiment of the present disclosure may realize interaction based on a video sticker added to a video. As shown in Fig. 1, interaction method provided in the present embodiment may include the following steps.

S101: displaying a content input panel in response to a matching operation for a first content included in a target video sticker, where the target video sticker is added to a target video, and the content input panel is configured for a current user to input a second content matching the first content.

The target video may be a video that is currently played, and the target video sticker is added to the video. The target video sticker may be a video sticker with a content matching type. That is, a content to be matched that is set by a video maker may be displayed in the target video sticker, and a content that is considered to match the content to be matched in the target video sticker is input by a current user. Correspondingly, the first content may be the content to be matched included in the target video sticker. The second content may be the content input by the current user. For example, the target video sticker may be a couplet sticker/Spring Festival couplet sticker. The first content may be the first line of a couplet/Spring Festival couplet set by the video maker, and the second content may be the second line of the couplet/Spring Festival couplet input by the current user and the following description is made by taking this case for example. It will be appreciated that matching a Spring Festival couplet/a couplet is merely exemplary, and the corresponding application scenarios may also be other cases, e.g., matching a poem, matching a Ci-poetry, and matching a song, and etc. In these scenarios, for example, the first line of a couplet/Spring Festival couplet, a poem, a Ci-poetry, or a song may be given in a page, requiring the user to give the second line of the couplet, the poem, the Ci-poetry, or the song. Other ways may also be possible, the description is merely made here for example.

The matching operation may be an operation for instructing the electronic device to display the content input panel to input the second content matching the first content and may act within a video playing region of the target video. For example, the matching operation may be a triggering operation for the target video sticker in a video picture shown in the video playing region, a triggering operation acting on a first matching control corresponding to any bullet-screen comment containing the first content and the second content shown in the video playing region, or a triggering operation for a re-input control displayed in a matching result window. In this case, in an example, the matching operation includes at least one of the triggering operation acting on the target video sticker, the triggering operation acting on the first matching control corresponding to any matching message, and the triggering operation acting on the re-input control that is displayed in the matching result window. Moreover, the matching operation may also act within a comment showing region of the target video, and may be, for example, a triggering operation for a second matching control or reply control corresponding to any comment including the first content and the second content shown in the comment showing region. In this case, in an example, the matching operation includes the triggering operation acting on the second matching control corresponding to any matching message.

Exemplarily, the electronic device may play the target video based on a video playing operation by the current user for the target video, and when a video frame to which the target video sticker 20 is added is played, show the target video sticker 20, as shown in Fig. 2. Thus, the current user may watch the target video, and if the current user desires to interact with the target video sticker 20 shown in the target video, for example, when the current user desires to input the second content matching the first content of the target video sticker 20 shown in the target video, the matching operation, e.g., triggering the target video sticker 20, may be performed. Alternatively, when a bullet-screen comment message including the first content is displayed in the video playing region, any bullet-screen comment message including the first content is triggered to instruct the electronic device to display the first matching control for the bullet-screen comment message, and the first matching control is further triggered.

Alternatively, the electronic device may show a comment message for the target video within the comment showing region of the target video. Thus, when the current user desires to input the second content matching the first content of the target video sticker shown in the target video, any comment message including the first content shown in the comment showing region of the target video is triggered to instruct the electronic device to display the second matching control for the comment message, and the second matching control is further triggered. Alternatively, a reply control for any comment message including the first content shown in the comment showing region of the target video is triggered.

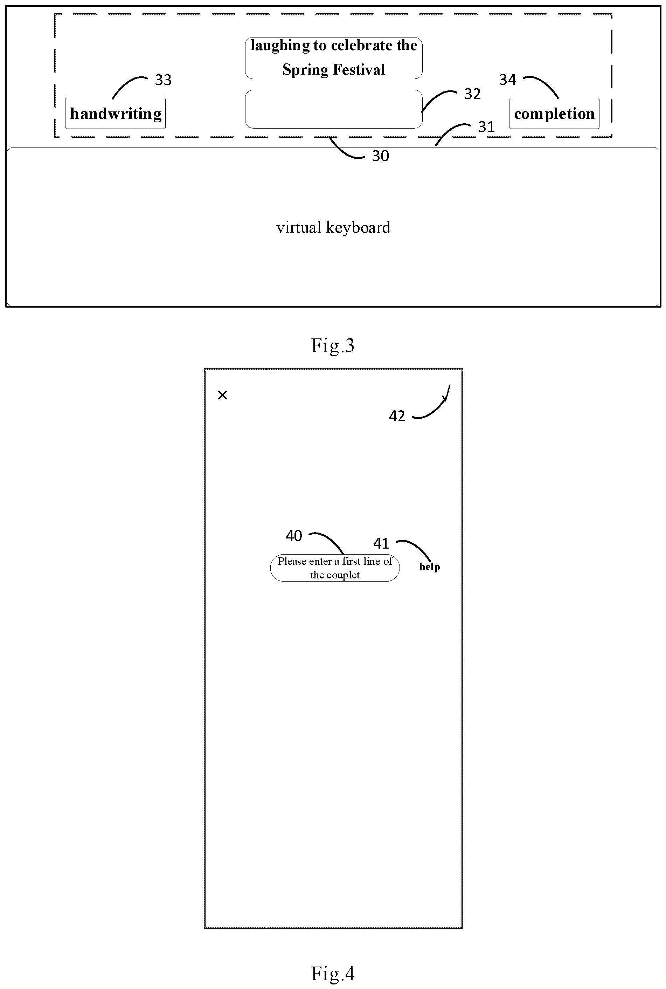

Correspondingly, when the electronic device detects that the current user triggers the target video sticker, the first matching control, or the second matching control, it may be determined that the matching operation for the first content included in the target video sticker is received and the content input panel 30 is displayed in response to the matching operation, as shown in Fig. 3 (the content input panel is shown in landscape mode for example in the figure), allowing the current user to input the second content matching the first content included in the target video sticker.

Moreover, as shown in Fig. 3, when the content input panel 30 is displayed, a virtual keyboard 31 may be further displayed for the current user to input the second content to a content input region 32 of the content input panel 30 by triggering corresponding virtual keys on the virtual keyboard 31. Also, a handwriting control 33 may be displayed. Thus, the current user may trigger the handwriting control 33 to instruct the electronic device to stop displaying the virtual keyboard 31 and display a handwriting input region for the current user to input the second content to the content input panel 30 by handwriting in the handwriting input region.

In the present embodiment, the video maker may add the target video sticker to the video. Taking for example that the target video sticker is a couplet sticker, the video maker may trigger a sticker control in a video editing page or posting page to instruct the electronic device to display a sticker panel and trigger a couplet sticker control displayed in the sticker panel to add a couplet sticker to a currently edited video. Correspondingly, when the electronic device detects that the video maker triggers the couplet sticker control, the couplet sticker may be added to the video and an input region 40 for the first line of a couplet may be displayed, as shown in Fig. 4, allowing the video maker to input the first line of a couplet. Moreover, when the electronic device displays the input region 40 for the first line of a couplet, a help control 41 may be further displayed. In response to detecting that the video marker triggers the help control 41, one of preset first lines of couplets is randomly selected and input to the input region 40 for the first line of a couplet. Thus, after the completion of inputting the first line of a couplet, the video maker may trigger a confirmation control 42 to add the first line of the couplet input in the input region 40 for the first line of a couplet to the couplet sticker.

S102: in response to an inputting completion operation, obtaining the second content input by the current user in the content input panel and sending a first matching message, where the first matching message includes the first content and the second content.

The inputting completion operation may be a triggering operation for completing inputting, such as a triggering operation for triggering a completion control. The first matching message may be a matching message sent by the current user, and the matching message may include the first content in the target video sticker and the second content input by the current user, and may be a bullet-screen comment message or a comment message.

For example, as shown in Fig. 3, the current user may input the second content matching the first content in the content input panel 30. For example, when the first content is the first line of a couplet, the current user may input the second line of the couplet in the content input region 31 of the content input panel 30, and trigger the completion control 34 displayed in the content input panel 30 after completing inputting. Correspondingly, when the electronic device detects that the current user triggers the completion control 34, it may be determined that the inputting completion operation is received, and the second content input by the current user in the content input region 31 of the content input panel 30 is obtained, and a matching message including the first content and the second content is generated and sent, and may be further displayed. For example, when the matching operation acts on the video playing region, a bullet-screen comment message including the first content and the second content may be sent and shown; and when the matching operation acts on the comment showing region, a comment message including the first content and the second content may be sent and shown.

In the present embodiment, to facilitate determining, by the current user, whether the second content input by the current user matches the first content, in an example, after the obtaining the second content input by the current user in the content input panel, the interaction method further includes: stopping displaying the content input panel and showing a matching result of the second content with the first content. For example, after the electronic device obtains the second content input by the current user in the content input panel, the electronic device may match the second content with the first content according to a preset matching rule to generate a matching result. For example, word splitting is performed on the first content and the second content based on semantic analysis, and matching is further performed by comparison on word count, property of word, and/or phoneme, and a matching result is generated. Alternatively, the first content and the obtained second content are input to a pre-trained matching model, and a matching result output by the matching model is obtained; and the showing of the content input panel is stopped, and the matching result is shown.

In an implementation, the first matching message sent by the current user may be shown in the form of a bullet-screen comment message. That is, the first matching message may be the bullet-screen comment message. Correspondingly, in the process of playing the target video, the electronic device may show in the video playing region the first matching message sent by the current user and including the first content and the second content input by the current user, and a second matching message sent by other user than the current user and including the first content and the second content input by the other user. In this case, the interaction method provided in the present embodiment may further include: showing the matching message of the target video in the playing process of the target video, where the matching message includes the first matching message, and the second matching message sent by other user than the current user, and the matching message is a bullet-screen comment message. That is, in the video playing process, the electronic device may show in the video playing region a bullet-screen comment message sent within the target video and including the first content and the second content, and the bullet-screen comment message may include a bullet-screen comment message sent by the current user and/or a bullet-screen comment message sent by other user.

In the present embodiment, when the matching message (including the first matching message and/or the second matching message) is a bullet-screen comment message, matching information may be shown according to whether a bullet-screen comment showing function of a client is in an on state. For example, when the bullet-screen comment showing function of the client is in the on state, in the playing process of the target video, matching information in the target video is shown in the form of a bullet-screen comment. When bullet-screen comment showing at the client is in an off state, in the playing process of the target video, the matching information in the target video is not shown.

To further prompt the user to have an interaction and enhance the interaction experience of the user, in the present embodiment, when the bullet-screen comment showing function of the client is in the on state, in the playing process of the target video, the matching information in the target video is shown in the form of the bullet-screen comment. When bullet-screen comment showing at the client is in the off state, in the playing process of the target video, target matching information included in the matching information in the target video is shown. In this case, in an embodiment, the showing the matching message of the target video in the playing process of the target video includes: if the bullet-screen comment showing function of the client is in the on state, showing the matching message of the target video in the playing process of the target video. The method further includes: if the bullet-screen comment showing function of the client is in the off state, showing a target matching message of the target video in the playing process of the target video, where the target matching message is a matching message having a number of likes greater than a preset number threshold.

Here, the target matching information may be matching information having a number of likes greater than the preset number threshold (e.g., 5 or 10). For any piece of matching information shown in the form of the bullet-screen comment, the user (including the current user and other user) watching the video may trigger the matching information to instruct the electronic device to display a like control corresponding to the matching information and further trigger the like control to give a like for the matching information. Correspondingly, if the number of likes for a certain piece of matching information is not zero, when the matching information is shown in the form of matching information in the video playing region, the number of likes for the matching information may be shown synchronously.

In the present embodiment, when matching messages are shown in the form of bullet-screen comments in the video playing region, each matching message may be shown in a same showing style., or the matching messages having different corresponding matching degrees may be shown in different showing styles. For example, a matching message having a corresponding matching degree greater than or equal to a preset matching degree threshold is shown in a first showing style and a matching message having a corresponding matching degree less than the preset matching degree threshold is shown in a second showing style, so that the user can distinguish between the matching message having a higher matching degree and the matching message having a lower matching degree in the process of viewing the video. In this case, in an embodiment, the showing the matching message of the target video includes: for each matching message, if the matching degree between the second content and the first content included in the matching message is greater than or equal to the preset matching degree threshold, showing the matching message in the first showing style; and if the matching degree between the second content and the first content included in the matching message is less than the preset matching degree threshold, showing the matching message in the second showing style.

Here, a matching degree corresponding to a matching message may be construed as the matching degree between the second content and the first content included in the matching message (i.e., the first content included in the target video sticker) included in the matching message, and the matching degree may be determined, for example, for the first content and the second content, by performing word splitting based on semantic analysis and further by comparison on word count, property of word, and/or phoneme, e.g., determined according to a word count correspondence, a word property correspondence, and a phoneme correspondence of the first content and the second content. In some embodiments, the matching degree may also be determined based on the pre-trained matching model, which may be trained, for example, based on models such as a neural network model or a Bayesian network model. The matching degree threshold may be set as required. For example, when the matching degrees ranges from 0 to 1, the preset matching degree threshold may be configured to a numerical value such as 0.2 or 0.3.

In another implementation, the first matching message sent by the current user may be shown in the form of a comment message. That is, the first matching message may be the comment message. Correspondingly, the electronic device may show in the comment showing region of the target video the first matching message sent by the current user and including the first content and the second content input by the current user, and the second matching message sent by other user than the current user and including the first content and the second content input by the other user. In this case, the interaction method provided in the present embodiment may further include: showing a matching message of the target video in the comment showing region of the target video, where the matching message includes the first matching message and a second matching message sent by other user than the current user, and the matching message is a comment message. That is, the electronic device may show in the comment showing region of the target video a comment message including the first content and the second content for the target video, and the comment message may include a comment message sent by the current user and/or a comment message sent by another user.

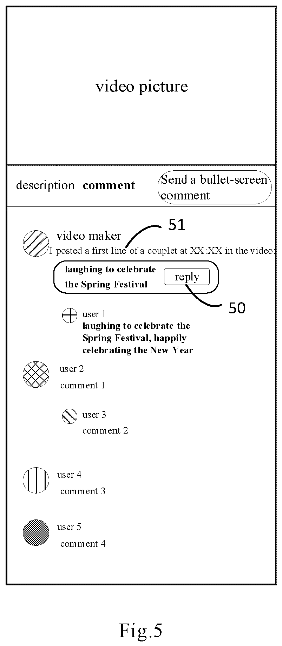

Exemplarily, for the case where the target video includes the target video sticker, when the target video is posted successfully, the video maker of the target video may automatically post a comment message including the first content of the target video sticker, a matching control 50, and time node information 51 corresponding to the target video sticker in the target video. Correspondingly, as shown in Fig. 5, the comment message sent by the video maker of the target video and a comment message sent by other user (e.g., a matching message sent by other user and shown in the formed of the comment message) may be shown in the comment showing region of the target video.

Thus, the current user may perform the matching operation by triggering the matching control 50 or replying to the matching message sent by other user in a comment area. Correspondingly, in response to receiving the matching operation, the electronic device may display the content input panel for the current user to input the second content matching the first content, and in response to receiving the inputting completion operation, may obtain the second content input by the current user in the content input panel, and send and show a comment message including the first content and the second content. Moreover, by triggering the time node information 51 included in the comment message posted by the video maker of the target video, the current user may adjust the playing progress of the target video to the playing progress corresponding to the time node information 51 to view the target video sticker added to the target video.

Moreover, when the target video sticker is a couplet sticker/Spring Festival couplet sticker, after the second content input by the current user in the content input panel is obtained, the first content may be taken as the first line of a couplet and the second content as the second line of the couplet to generate the couplet/Spring Festival couplet, and in response to receiving an instruction triggered by the user to add the couplet/Spring Festival couplet to a personal homepage, the couplet/Spring Festival couplet is shown in a background image of the personal homepage of the current user. Thus, the display effect of the personal homepage is improved; the diversified interaction requirements of the user are met; and the user experience is enhanced.

According to the interaction method provided in the present embodiment, the content input panel is displayed in response to the matching operation for the first content included in the target video sticker, where the target video sticker is added to the target video, and the content input panel is configured for the current user to input the second content matching the first content. In response to the inputting completion operation, the second content input by the current user in the content input panel is obtained and the first matching message including the first content and the second content is sent. In the present embodiment, by showing the video sticker with the content matching type added to the target video to the user, the user can interact by inputting a corresponding content that is matched with the content in the video sticker, which can enrich the interaction manners of the video sticker and improve the user experience.

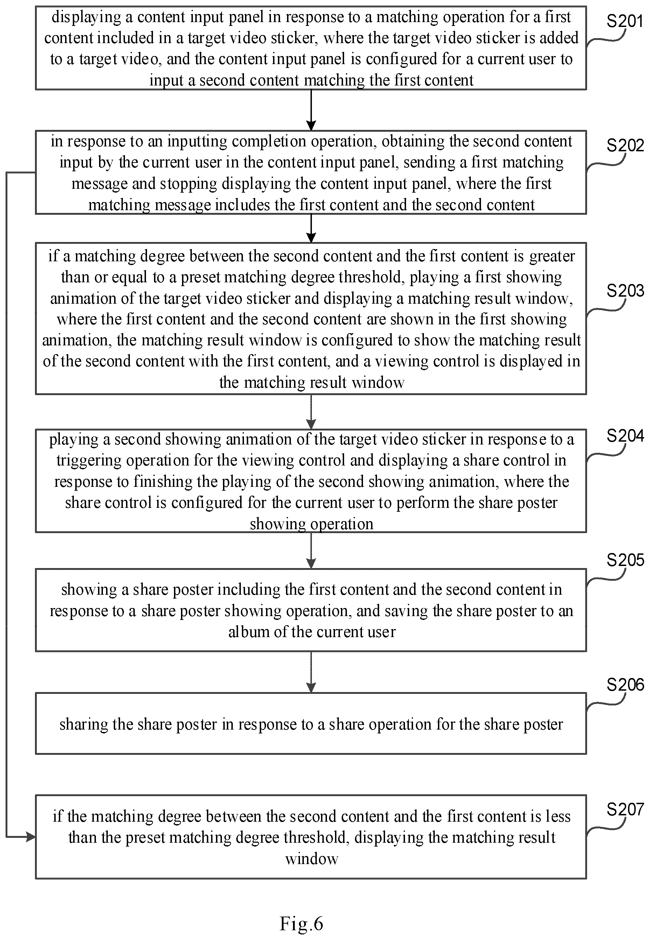

Fig. 6 is a flowchart of another interaction method provided in an embodiment of the present disclosure. The present embodiment may be combined with one or more of the above-mentioned embodiments. In an embodiment, the showing the matching result of the second content with the first content includes: if the matching degree between the second content and the first content is greater than or equal to the preset matching degree threshold, playing a first showing animation of the target video sticker and displaying a matching result window, where the first content and the second content are shown in the first showing animation, and the matching result window is configured to show the matching result of the second content with the first content; and if the matching degree between the second content and the first content is less than the preset matching degree threshold, displaying the matching result window.

In an embodiment, the after the playing the first showing animation of the target video sticker and displaying the matching result window further includes: showing a share poster including the first content and the second content in response to a share poster showing operation; and sharing the share poster in response to a share operation for the share poster.

In an embodiment, the before the sharing the share poster in response to the share operation for the share poster further includes: saving the share poster to an album of the current user.

In an embodiment, a view control is displayed in the matching result window. The method further includes: playing a second showing animation of the target video sticker in response to a triggering operation for the view control and displaying a share control in response to finishing the playing of the second showing animation, where the share control is configured for the current user to perform the share poster showing operation.

Correspondingly, as shown in Fig. 6, the interaction method provided in the present embodiment may include the following steps.

S201: displaying a content input panel in response to a matching operation for a first content included in a target video sticker, where the target video sticker is added to a target video, and the content input panel is configured for a current user to input a second content matching the first content.

S202: in response to an inputting completion operation, obtaining the second content input by the current user in the content input panel, sending a first matching message and stopping displaying the content input panel, and S203 or S207 is performed, where the first matching message includes the first content and the second content.

In the present embodiment, after the second content input by the current user in the content input panel is obtained, the displaying of the content input panel may be stopped so that the current user views a video picture or comment content blocked by the content input panel.

S203: if a matching degree between the second content and the first content is greater than or equal to a preset matching degree threshold, playing a first showing animation of the target video sticker and displaying a matching result window, where the first content and the second content are shown in the first showing animation, the matching result window is configured to show the matching result of the second content with the first content, and a view control is displayed in the matching result window.

The matching result may include a matching grade between the second content input by the current user and the first content included in the target video sticker. The matching grade may be shown in the form of a copy corresponding to the matching grade. The matching grade may be determined based on, for example, the matching degree between the first content and the first content. For example, when the matching degree is greater than 0.8, the matching degree grade may be rated as excellent; when the matching degree is greater than or equal to 0.2 and less than or equal to 0.8, the matching degree grade may be rated as good; and when the matching degree is less than 0.2, the matching degree grade may be rated as medium.

The first content and the second content input by the current user may be shown in the first showing animation. The animation content of the first showing animation may be set flexibly as required. Taking for example that the target video sticker is a couplet sticker, the first showing animation may be a vertical couplet animation, and the first content included in the target video sticker is shown in the first line of the vertical couplet animation while the second content input by the current user is shown in the second line of the vertical couplet animation.

In the present embodiment, the matching result of the first matching message having the corresponding matching degree greater than or equal to the preset matching degree threshold and the matching result of the first matching message having the corresponding matching degree less than the preset matching degree threshold may be shown in different manners. For example, the matching results of the matching messages having the matching degree grades rated as excellent and good as well as the matching message having the matching degree grade rated as medium may be shown in different ways.

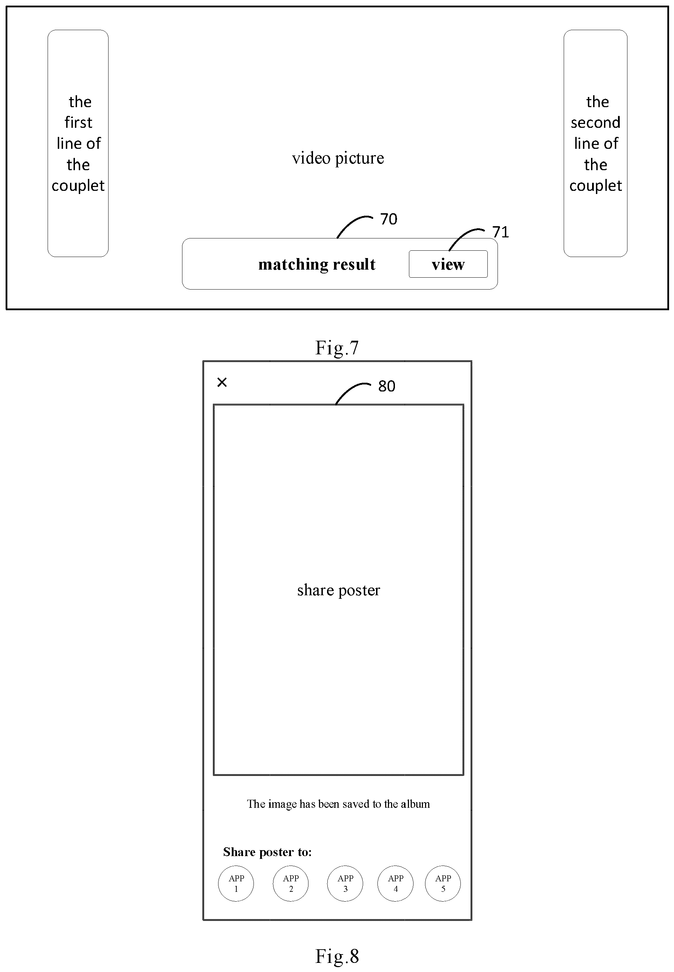

Exemplarily, as shown in Fig. 7, when the matching degree between the second content input by the current user and the first content included in the target video sticker is greater than or equal to the preset matching degree threshold, the first showing animation of the target video sticker may be played. In the playing process of the first showing animation or when the playing of the first showing animation is finished, a matching result window 70 is displayed, and the matching result of the second content with the first content and a view control 71 are shown in the matching result window, i.e., the matching result of the matching message sent by the current user and the view control 71 are shown.

S204: playing a second showing animation of the target video sticker in response to a triggering operation for the view control and displaying a share control in response to finishing the playing of the second showing animation, where the share control is configured for the current user to perform the share poster showing operation.

The second showing animation may be an animation showing the first content and the second content and different from the first showing animation, and the animation content of the second showing animation may be flexibly set as required. Taking for example that the target video sticker is a couplet sticker, the second showing animation may show the first content in the form of the first line of a couplet and the second content in the form of the second line of the couplet, and may further show a picture depicting a cartoon image applauding, where the cartoon image is the Chinese zodiac corresponding to the current year. Also, when the second showing animation is played, a sound effect, e.g., applauding sound effect, corresponding to the second showing animation may be played synchronously.

Exemplarily, as shown in Fig. 7, the electronic device displays the view control 71 in the matching result window. Thus, when the current user desires to view the second showing animation of the target video sticker, the view control 71 may be triggered. Correspondingly, in response to detecting that the current user triggers the view control 71, the electronic device may play the second showing animation of the target video sticker and displays the share control when the playing of the second showing animation is finished.

S205: showing a share poster including the first content and the second content in response to a share poster showing operation, and saving the share poster to an album of the current user.

Exemplarily, the electronic device displays the share control. Thus, when the current user desires to share the first content and the second content, the share control may be triggered. Correspondingly, as shown in Fig. 8, in response to detecting that the current user triggers the share control, the electronic device may generate a share poster 80 including the first content and the second content and show the share poster 80, and may further save the share poster 80 to the album of the current user, e.g., save the share poster 80 to an online album and/or local album of the current user, so that the current user can view the share poster 80 again or share the share poster 80. The share poster 80 includes the first content and the second content, and may further include user information (e.g., user avatar and/or nickname) of the current user and/or the matching result of the second content with the first content.

Moreover, when the second showing animation is played and the share control is displayed, a closing control may be further shown. Thus, the current user may instruct the electronic device to stop playing the second showing animation or stop displaying the share control by triggering the closing control so as to continue watching the target video or viewing the comments for the target video. If the current user does not trigger any control in a preset duration (e.g., 2 s or 3 s) after finishing the playing of the second showing animation, the displaying of the share control may be stopped so that the current user can continue watching the target video or viewing the comments for the target video.

S206: sharing the share poster in response to a share operation for the share poster.

For example, as shown in Fig. 8, when the share poster is shown, an application identifier (e.g., application icon and/or application name) of an application to be shared (including an application corresponding to the current client) for selection by the current user may be further shown. Thus, the current user may trigger the application identifier of the application to be shared to enter a share page corresponding to the application to be shared and may share the share poster in the share page.

In an implementation, when the share poster is triggered, a client triggering the share poster is instructed to play the target video with a time node corresponding to the target video sticker in the target video as a playing starting point.

In the above implementation, when the share poster is triggered by the current user or by a shared user to whom the share poster is shared, the corresponding client may be instructed to play the target video with the time node corresponding to the target video sticker in the target video as the playing starting point. The client may be a client that the current user logs in, or may be other client, such as a client that the shared user logs in.

For example, the share poster may include a graphic code, such as a bar code or a two-dimensional code. Thus, the current user or the shared user to whom the share poster is shared may scan the graphic code to view the video sticker added to the target video. Correspondingly, when the electronic device scans the graphic code obtained in the share poster, the video identifier of the target video corresponding to the share poster and the time node information of the target video sticker in the target video may be determined based on the graphic code. The target video is obtained according to the video identifier and a video playing page is displayed, and the target video is played in the video playing page with a time node (i.e., the time node at which the target video sticker is located) corresponding to the time node information as the playing starting point so that the current user/shared user can view the target video sticker added to the target video.

It will be appreciated that when the current user performs interaction with the target video sticker for the first time, if the matching degree between the second content input by the current user and the first content is greater than the preset matching degree threshold, the second showing animation may be automatically played first, and the share control may be shown when the playing of the second showing animation is finished to prompt the current user that the target video sticker has the second showing animation, and the first content and the second content may be shared. In this case, the first showing animation of the target video sticker may be played and the matching result window is displayed when the current user finishes sharing, or the showing of the second showing animation is stopped, or the displaying of the share control is stopped and the share poster is not displayed.

S207: if the matching degree between the second content and the first content is less than the preset matching degree threshold, displaying the matching result window.

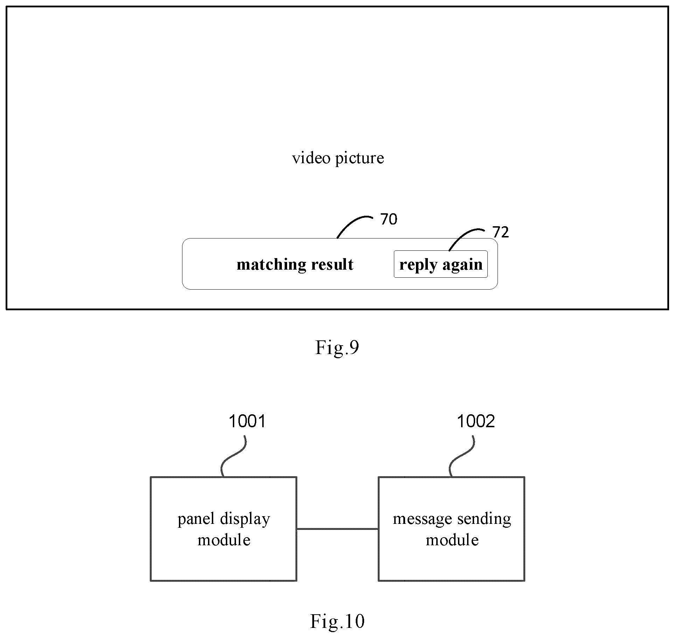

For example, when the matching degree between the second content input by the current user and the first content included in the target video sticker is less than the preset matching degree threshold, the first showing animation may not be played and the matching result window 70 is displayed directly, and the matching result of the second content with the first content is shown in the matching result window, i.e., the matching result of the matching message sent by the current user is shown, as shown in Fig. 9.

Moreover, referring continuously to Fig. 9, when the matching degree between the second content and the first content is less than the preset matching degree threshold, a re-input control 72 may be further displayed in the matching result window 70. Thus, the current user may perform the matching operation again by triggering the re-input control 72 to instruct the electronic device to display the content input panel again, allowing for re-inputting of the second content.

According to the interaction method provided in the present disclosure, when the matching degree between the second content and the first content is greater than or equal to the matching degree threshold and when the matching degree between the second content and the first content is less than the matching degree threshold, the matching results are shown in different forms, so that both sharing and adjustment requirements of the user can be met and the user experience can be further enhanced.

Fig. 10 is a structural block diagram of an interaction apparatus provided in an embodiment of the present disclosure. The apparatus may be implemented by software and/or hardware and may be configured in an electronic device, typically configured in a mobile phone or a tablet computer, and may realize interaction with a video sticker with a content matching type by performing the interaction method. As shown in Fig. 10, the interaction apparatus provided in the present embodiment may include a panel display module 1001 and a message sending module 1002.

The panel display module 1001 is configured to display a content input panel in response to a matching operation for a first content included in a target video sticker, where the target video sticker is added to a target video, and the content input panel is configured for a current user to input a second content matching the first content.

The message sending module 1002 is configured to, in response to an inputting completion operation, obtain the second content input by the current user in the content input panel and send a first matching message, where the first matching message includes the first content and the second content.

According to the interaction apparatus provided in the present embodiment, the content input panel is displayed by the panel display module in response to the matching operation for the first content included in the target video sticker, where the target video sticker is added to the target video, and the content input panel is configured for the current user to input the second content matching the first content. In response to the inputting completion operation, by the message sending module, the second content input by the current user in the content input panel is obtained and the first matching message including the first content and the second content is sent. In the present embodiment, by showing the video sticker with the content matching type added to the target video to the user, the user can interact by inputting a corresponding content that is matched with the content in the video sticker, which can enrich the interaction manners of the video sticker and improve the user experience.

In an embodiment, the message sending module 1002 may be further configured to, after the obtaining the second content input by the current user in the content input panel, stop displaying the content input panel and show a matching result of the second content with the first content.

In an embodiment, the message sending module 1002 may include: a first result showing unit configured to, when a matching degree between the second content and the first content is greater than or equal to a preset matching degree threshold, play a first showing animation of the target video sticker and display a matching result window, where the first content and the second content are shown in the first showing animation, and the matching result window is configured to show the matching result of the second content with the first content; and a second result showing unit configured to, when the matching degree between the second content and the first content is less than the preset matching degree threshold, display the matching result window.

In an embodiment, the interaction apparatus provided in the present embodiment may further include: a poster showing module configured to, after the playing the first showing animation of the target video sticker and displaying the matching result window, show a share poster including the first content and the second content in response to a share poster showing operation; and a poster sharing module configured to share the share poster in response to a share operation for the share poster.

In the above embodiment, when the share poster is triggered, a client triggering the share poster is instructed to play the target video with a time node corresponding to the target video sticker in the target video as a playing starting point.

In an embodiment, the interaction apparatus provided in the present embodiment may further include: a poster saving module configured to, before the sharing the share poster in response to the share operation for the share poster, save the share poster to an album of the current user.

In the above-mentioned embodiment, a view control may be displayed in the matching result window. The interaction apparatus provided in the present embodiment may further include a share control display module configured to play a second showing animation of the target video sticker in response to a triggering operation for the view control and display a share control in response to finishing the playing of the second showing animation, where the share control is configured for the current user to perform the share poster showing operation.

In an embodiment, the interaction apparatus provided in the present embodiment may further include: a first message showing module configured to show a matching message of the target video in a playing process of the target video, where the matching message includes the first matching message and a second matching message sent by other user than the current user, and the matching message is a bullet-screen comment message.

In the above-mentioned embodiment, the first message showing module may be configured to: when a bullet-screen comment showing function of a client is in an on state, show the matching message of the target video in the playing process of the target video; when the bullet-screen comment showing function of the client is in an off state, show a target matching message of the target video in the playing process of the target video, where the target matching message is a matching message having a number of likes greater than a preset number threshold.

In the above-mentioned embodiment, the first message showing module may be configured to: for each matching message, if the matching degree between the second content and the first content included in the matching message is greater than or equal to a preset matching degree threshold, show the matching message in a first showing style; and if the matching degree between the second content and the first content included in the matching message is less than the preset matching degree threshold, show the matching message in a second showing style.

In the above-mentioned embodiment, the matching operation may include at least one of a triggering operation acting on the target video sticker, a triggering operation acting on a first matching control corresponding to any matching message, and a triggering operation acting on a re-input control that may be displayed in a matching result window.

In an embodiment, the interaction apparatus provided in the present embodiment may further include: a second message showing nodule configured to show a matching message of the target video in a comment showing region of the target video, where the matching message includes the first matching message and a second matching message sent by other user than the current user, and the matching message is a comment message.

In the above embodiment, the matching operation may include a triggering operation acting on a second matching control corresponding to any matching message.

The interaction apparatus provided in the embodiment of the present disclosure may perform the interaction method provided in any embodiment of the present disclosure, and has corresponding functional modules for performing the interaction method and beneficial effects. For technical details not described in detail in the present embodiment, a reference may be made to the interaction method provided in any embodiment of the present disclosure.

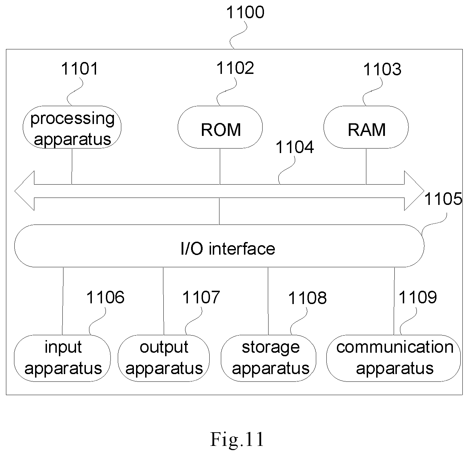

Referring to Fig. 11, Fig. 11 illustrates a schematic structural diagram of an electronic device (e.g., a terminal device) 1100 suitable for implementing the embodiments of the present disclosure. The terminal devices in the embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital television (TV), a desktop computer, or the like. The electronic device illustrated in Fig. 11 is merely an example, and should not pose any limitation to the functions and the range of use of the embodiments of the present disclosure.

As illustrated in Fig. 11, the electronic device 1100 may include a processing apparatus 1101 (e.g., a central processing unit, a graphics processing unit, etc.), which can perform various suitable actions and processing according to a program stored in a read-only memory (ROM) 1102 or a program loaded from a storage apparatus 1108 into a random-access memory (RAM) 1103. The RAM 1103 further stores various programs and data required for operations of the electronic device 1100. The processing apparatus 1101, the ROM 1102, and the RAM 1103 are interconnected through a bus 1104. An input/output (I/O) interface 1105 is also connected to the bus 1104.

Usually, the following apparatuses may be connected to the I/O interface 1105: an input apparatus 1106 including, for example, a touch screen, a touch pad, a keyboard, a mouse, a camera, a microphone, an accelerometer, a gyroscope, or the like; an output apparatus 1107 including, for example, a liquid crystal display (LCD), a loudspeaker, a vibrator, or the like; a storage apparatus 1108 including, for example, a magnetic tape, a hard disk, or the like; and a communication apparatus 1109. The communication apparatus 1109 may allow the electronic device 1100 to be in wireless or wired communication with other devices to exchange data. While Fig. 11 illustrates the electronic device 1100 having various apparatuses, it should be understood that not all of the illustrated apparatuses are necessarily implemented or included. More or fewer apparatuses may be implemented or included alternatively.

Particularly, according to the embodiments of the present disclosure, the processes described above with reference to the flowcharts may be implemented as a computer software program. For example, the embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 1109 and installed, or may be installed from the storage apparatus 1108, or may be installed from the ROM 1102. When the computer program is executed by the processing apparatus 1101, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. Examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus, or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate, or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The computer readable medium carries one or more programs. The one or more programs, when executed by an electronic device, causes the electronic device to: display a content input panel in response to a matching operation for a first content included in a target video sticker, where the target video sticker is added to the target video, and the content input panel is configured for the current user to input a second content matching the first content; in response to an inputting completion operation, obtaining the second content input by the current user in the content input panel and sending a first matching message, where the first matching message includes the first content and the second content is sent.

The storage medium may be a non-transitory storage medium.

The computer program codes for performing the operations of the present disclosure may be written in one or more programming languages or a combination thereof. The above-mentioned programming languages include but not limit to object-oriented programming languages such as Java, Smalltalk, C++, and also include conventional procedural programming languages such as the "C" programming language or similar programming languages. The program code may be executed entirely on the current user's computer, partly on the current user's computer, as a stand-alone software package, partly on the current user's computer and partly on a remote computer, or entirely on the remote computer or server. In the scenario related to the remote computer, the remote computer may be connected to the current user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the module does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus, or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. Examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, example 1 provides an interaction method, including:
displaying a content input panel in response to a matching operation for a first content included in a target video sticker, in which the target video sticker is added to a target video, and the content input panel is configured for a current user to input a second content matching the first content; and
in response to an inputting completion operation, obtaining the second content input by the current user in the content input panel and sending a first matching message, in which the first matching message includes the first content and the second content.

According to one or more embodiments of the present disclosure, example 2, based on the method described in example1, after the obtaining the second content input by the current user in the content input panel, further includes:
stopping displaying the content input panel and showing a matching result of the second content with the first content.

According to one or more embodiments of the present disclosure, example 3, based on the method described in example 2, in which the showing the matching result of the second content with the first content includes:
in response to a matching degree between the second content and the first content being greater than or equal to a preset matching degree threshold, playing a first showing animation of the target video sticker and displaying a matching result window, in which the first content and the second content are shown in the first showing animation, and the matching result window is configured to show the matching result of the second content with the first content; and
in response to the matching degree between the second content and the first content being less than the preset matching degree threshold, displaying the matching result window.

According to one or more embodiments of the present disclosure, example 4, based on the method described in example 3, after the playing the first showing animation of the target video sticker and displaying the matching result window, further includes:
showing a share poster including the first content and the second content in response to a share poster showing operation; and
sharing the share poster in response to a share operation for the share poster.

According to one or more embodiments of the present disclosure, example 5, based on the method described in example 4, in which when the share poster is triggered, a client triggering the share poster is instructed to play the target video with a time node corresponding to the target video sticker in the target video as a playing starting point.

According to one or more embodiments of the present disclosure, example 6, based on the method described in example 4, before the sharing the share poster in response to the share operation for the share poster, further includes:
saving the share poster to an album of the current user.

According to one or more embodiments of the present disclosure, example 7, based on the method described in example 4, in which a view control is displayed in the matching result window, the method further includes:
playing a second showing animation of the target video sticker in response to a triggering operation for the view control and displaying a share control in response to finishing the playing of the second showing animation, in which the share control is configured for the current user to perform the share poster showing operation.

According to one or more embodiments of the present disclosure, example 8, based on the method described in at least one of examples 1-7, further includes:
showing a matching message of the target video in a playing process of the target video, in which the matching message includes the first matching message, and a second matching message sent by other user than the current user, and the first matching message and the second matching message are bullet-screen comment messages.

According to one or more embodiments of the present disclosure, example 9, based on the method described in example 8, in which the showing the matching message of the target video in the playing process of the target video includes:
when a bullet-screen comment showing function of a client is in an on state, showing the matching message of the target video in the playing process of the target video;
the method further including:
when the bullet-screen comment showing function of the client is in an off state, showing a target matching message of the target video in the playing process of the target video, in which the target matching message is a matching message having a number of likes greater than a preset number threshold.

According to one or more embodiments of the present disclosure, example 10, based on the method described in example 8, in which the showing the matching message of the target video includes:
for each matching message, showing the matching message in a first showing style in response to the matching degree between the second content and the first content included in the matching message being greater than or equal to a preset matching degree threshold; and
showing the matching message in a second showing style in response to the matching degree between the second content and the first content included in the matching message being less than the preset matching degree threshold.

According to one or more embodiments of the present disclosure, example 11, based on the method described in example 8, in which the matching operation includes at least one of a triggering operation acting on the target video sticker, a triggering operation acting on a first matching control corresponding to any matching message, and a triggering operation acting on a re-input control that is displayed in a matching result window.

According to one or more embodiments of the present disclosure, example 12, based on the method described in at least one of example 1-7, further includes:
showing a matching message of the target video in a comment showing region of the target video, in which the matching message includes the first matching message and a second matching message sent by other user than the current user, and the matching message is a comment message.

According to one or more embodiments of the present disclosure, example 13, based on the method described in example 12, in which the matching operation includes a triggering operation acting on a second matching control corresponding to any matching message.

According to one or more embodiments of the present disclosure, example 14 provides an interaction apparatus, including:
a panel display module, configured to display a content input panel in response to a matching operation for a first content included in a target video sticker, in which the target video sticker is added to a target video, and the content input panel is configured for a current user to input a second content matching the first content; and
a message sending module, configured to, in response to an inputting completion operation, obtain the second content input by the current user in the content input panel and send a first matching message, in which the first matching message includes the first content and the second content.

According to one or more embodiments of the present disclosure, example 15 provides an electronic device, including:
one or more processors; and
a memory, configured to store one or more programs,
in which the one or more programs, when executed by the one or more processors, cause the one or more processors to implement the interaction method according to any one of examples 1-13.

According to one or more embodiments of the present disclosure, example 16 provides a computer readable storage medium on which a computer program is stored, in which the computer program, when executed by a processor, causes implementing the interaction method according to any one of examples 1-13.

According to one or more embodiments of the present disclosure, example 16 provides a computer program product which, when executed by a computer, causes the computer to implement the interaction method according to any one of examples 1-13.

Those skilled in the art should understand that the scope of disclosure involved in the present disclosure is not limited to the embodiments formed by the specific combination of the above-mentioned technical features, and should also cover, without departing from the above-mentioned disclosed concept, other embodiments formed by any combination of the above-mentioned technical features or their equivalents, such as embodiments which are formed by replacing the above-mentioned technical features with the technical features disclosed in the present disclosure (but not limited to) with similar functions.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. An interaction method, comprising:
displaying a content input panel in response to a matching operation for a first content comprised in a target video sticker, wherein the target video sticker is added to a target video, and the content input panel is configured for a current user to input a second content matching the first content; and
in response to an inputting completion operation, obtaining the second content input by the current user in the content input panel and sending a first matching message, wherein the first matching message comprises the first content and the second content.

2. The method according to claim 1, after the obtaining the second content input by the current user in the content input panel, further comprising:
stopping displaying the content input panel and showing a matching result of the second content with the first content.

3. The method according to claim 2, wherein the showing the matching result of the second content with the first content comprises:
in response to a matching degree between the second content and the first content being greater than or equal to a preset matching degree threshold, playing a first showing animation of the target video sticker and displaying a matching result window, wherein the first content and the second content are shown in the first showing animation, and the matching result window is configured to show the matching result of the second content with the first content; and
in response to the matching degree between the second content and the first content being less than the preset matching degree threshold, displaying the matching result window.

4. The method according to claim 3, after the playing the first showing animation of the target video sticker and displaying the matching result window, further comprising:
showing a share poster comprising the first content and the second content in response to a share poster showing operation; and
sharing the share poster in response to a share operation for the share poster.

5. The method according to claim 4, wherein when the share poster is triggered, a client triggering the share poster is instructed to play the target video with a time node corresponding to the target video sticker in the target video as a playing starting point.

6. The method according to claim 4, before the sharing the share poster in response to the share operation for the share poster, further comprising:
saving the share poster to an album of the current user.

7. The method according to claim 4, wherein a view control is displayed in the matching result window, the method further comprises:
playing a second showing animation of the target video sticker in response to a triggering operation for the view control and displaying a share control in response to finishing the playing of the second showing animation, wherein the share control is configured for the current user to perform the share poster showing operation.

8. The method according to any one of claims 1 to 7, further comprising:
showing a matching message of the target video in a playing process of the target video, wherein the matching message comprises the first matching message, and a second matching message sent by other user than the current user, and the first matching message and the second matching message are bullet-screen comment messages.

9. The method according to claim 8, wherein the showing the matching message of the target video in the playing process of the target video comprises:
when a bullet-screen comment showing function of a client is in an on state, showing the matching message of the target video in the playing process of the target video;
the method further comprises:
when the bullet-screen comment showing function of the client is in an off state, showing a target matching message of the target video in the playing process of the target video, wherein the target matching message is a matching message having a number of likes greater than a preset number threshold.

10. The method according to claim 8, wherein the showing the matching message of the target video comprises:
for each matching message, showing the matching message in a first showing style in response to the matching degree between the second content and the first content comprised in the matching message being greater than or equal to a preset matching degree threshold; and
showing the matching message in a second showing style in response to the matching degree between the second content and the first content comprised in the matching message being less than the preset matching degree threshold.

11. The method according to claim 8, wherein the matching operation comprises at least one of a triggering operation acting on the target video sticker, a triggering operation acting on a first matching control corresponding to any matching message, and a triggering operation acting on a re-input control that is displayed in a matching result window.

12. The method according to any one of claims 1 to 7, further comprising:
showing a matching message of the target video in a comment showing region of the target video, wherein the matching message comprises the first matching message and a second matching message sent by other user than the current user, and the matching message is a comment message.

13. The method according to claim 12, wherein the matching operation comprises a triggering operation acting on a second matching control corresponding to any matching message.

14. An interaction apparatus, comprising:
a panel display module, configured to display a content input panel in response to a matching operation for a first content comprised in a target video sticker, wherein the target video sticker is added to a target video, and the content input panel is configured for a current user to input a second content matching the first content; and
a message sending module, configured to, in response to an inputting completion operation, obtain the second content input by the current user in the content input panel and send a first matching message, wherein the first matching message comprises the first content and the second content.

15. An electronic device, comprising:
one or more processors; and
a memory, configured to store one or more programs,
wherein the one or more programs, when executed by the one or more processors, cause the one or more processors to implement the interaction method according to any one of claims 1 to 13.

16. A computer readable storage medium on which a computer program is stored, wherein the computer program, when executed by a processor, causes implementing the interaction method according to any one of claims 1 to 13.

17. A computer program product which, when executed by a computer, causes the computer to implement the interaction method according to any one of claims 1 to 13.
